# EUROPÄISCHE PATENTSCHRIFT

(11) **EP 3 080 614 B1**
(45) Veröffentlichungstag und Bekanntmachung des Hinweises auf die Patenterteilung: **27.09.2023**
(21) Anmeldenummer: 14809378.4
(22) Anmeldetag: 05.12.2014
(51) Int. Cl.: G01N 35/02, B01L 3/00, G01N 35/04, B01L 9/00

(54) **PROBENMANIPULATIONSEINRICHTUNG**
SAMPLE-MANIPULATING DEVICE
DISPOSITIF DE MANIPULATION D'ÉCHANTILLONS

(30) Priorität: 13.12.2013 DE 102013114041
(43) Veröffentlichungstag der Anmeldung: 19.10.2016
(73) Patentinhaber: Hamilton Bonaduz AG, 7402 Bonaduz (CH)
(72) Erfinder: HOFFMANN, Peter, 18528 Bergen auf Rügen (DE); FREY, Martin, CH-8864 Reichenburg (CH); ZAHNER, Beat, CH-8722 Kaltbrunn (CH); TAPPE, Petra, CH-7000 Chur (CH)
(74) Vertreter: Schmitt-Nilson Schraud Waibel Wohlfrom Patentanwälte Partnerschaft mbB
(86) Internationale Anmeldenummer: PCT/EP2014/076673
(87) Internationale Veröffentlichungsnummer: WO 2015/086445

(56) Entgegenhaltungen:
- EP-A1- 1 640 723
- WO-A2-2006/111634
- WO-A2-2012/059701

## Beschreibung

Die vorliegende Erfindung betrifft eine Probenmanipulationseinrichtung mit einer Probeneinheit zur Aufnahme von wenigstens einem Probengefäß sowie mit einer Manipulationseinheit mit wenigstens einem Manipulationswerkzeug. Die Probeneinheit und die Manipulationseinheit sind relativ zueinander entlang wenigstens einer Verfahrrichtung verfahrbar.

WO 2012/059701 A2 zeigt eine elektronische Vorrichtung zum Managen eines standardisierten Probenträgers innerhalb eines automatischen biologischen oder chemischen Analyse-Systems. Das Analyse-System verfügt über einen Greifer, mit dem ein Deckel eins Probenträgers angehoben werden kann.

Die hier beschriebene Probenmanipulationseinrichtung ist zum Abnehmen von Deckeln von Probengefäßen und/oder zum Aufsetzen von Deckeln auf Probengefäße ausgebildet. Die Probengefäße enthalten insbesondere Proben, bei denen wenigstens eine Phase in fließfähigem Zustand vorliegt, d.h. flüssig oder zähflüssig ist. Beispielsweise kann die zu behandelnde Probe mikrobiologisches oder anderes Material enthalten, wie es in der biochemischen, pharmazeutischen, gentechnischen oder medizinischen Industrie bzw. Forschung behandelt wird. Ein möglichst effizienter und automatisierter Ablauf der Probenbehandlung ist dabei erwünscht, gerade in Anwendungen, in denen eine große Menge von Proben zu behandeln sind.

Die zu behandelnden Proben befinden sich in Probengefäßen, die in der Regel mittels eines Deckels verschlossen werden können, um die im Probengefäß befindliche Probe gegenüber der Umgebung zu verschließen. Dies spielt beispielsweise bei mikrobiologischen Proben eine Rolle, wenn die Proben nach einer Behandlung für eine bestimmte Inkubationszeit hermetisch unter Verschluss gehalten bleiben sollen. Die Deckel können wieder entfernt werden, wenn die Probe nach Ablauf der Inkubationszeit weiter behandelt werden soll. Die Manipulationseinrichtung der hier beschriebenen Art soll insbesondere zum Verschließen der Probengefäße mit einem Deckel bzw. zum Abnehmen des Deckels dienen. Deckel soll hier ganz allgemeinen verstanden werden im Sinne jedweder Konstruktion zum Verschließen des Probengefäßes, beispielsweise in der Form von Stopfen, Stöpsel, o.ä.. In vielen Fällen wird der Deckel die Konfiguration eines Schraubverschlusses haben.

In aller Regel werden eine Mehrzahl von Probengefäßen in einem Probenträger untergebracht sein und parallel behandelt werden. Für den Probenträger haben sich bestimmte standardisierte Formate eingebürgert, gemäß denen eine bestimmte Anzahl von Probengefäßen in matrixartiger Weise in jeweiligen Probenaufnahmen angeordnet sein können. Häufig werden für die Probenträger Formate verwendet, wie sie gemäß den SBS-Richtlinien standardisiert sind (Society of Biomolecuar Sciences, z.B. gemäß ANSI/SBS 1-2004, ANSI/SBS 2-2004, ANSI/SBS 3-2004, ANSI/SBS 4-2004). Ein solcher Probenträger kann beispielsweise 48 Probenaufnahmen in einer Anordnung mit 6 Zeilen zu je 8 Probenaufnahmen aufweisen, 96 Probenaufnahmen in einer Anordnung mit 8 Zeilen zu je 12 Probenaufnahmen aufweisen, 394 Probenaufnahmen in einer Anordnung mit 16 Zeilen zu je 24 Probenaufnahmen aufweisen oder oder 1536 Probenaufnahmen in einer Anordnung mit 32 Zeilen zu je 48 Probenaufnahmen aufweisen.

Aus der JP 2009 229109 A ist eine Probenmanipulationseinrichtung bekannt, bei der Probengefäße automatisch geöffnet und wieder verschlossen werden können.

Das Format der Probenträger für aufeinanderfolgend zu behandelnde Proben ändert sich häufig im Laufe eines Prozessablaufs. Selbst wenn immer nur Probenträger einer gleichen Konfiguration verwendet werden sollen (beispielsweise Probenträger mit 96 Probenaufnahmen), besteht häufig das Problem, dass einzelne in einem Prozessablauf aufeinanderfolgend zu behandelnde Probenträger in unterschiedlicher Orientierung behandelt werden sollen. Daher sind bislang regelmäßig relativ mühsame Umstellungsprozesse an der Probenmanipulationseinrichtung erforderlich, bevor Proben behandelt werden können, die in einem Probenträger mit anderem Format - hierunter sollen Probenträger unterschiedlicher Konfiguration in gleicher oder verschiedener Orientierung wie auch Probenträger mit unterschiedlicher Orientierung, jedoch ansonsten gleicher Konfiguration, verstanden werden - aufgenommen sind.

Aufgabe der Erfindung ist es, eine Probenmanipulationseinrichtung der oben beschriebenen Art bereitzustellen, die mit Probenträgern unterschiedlicher Formate ohne aufwändigen Umstellungsprozess kompatibel ist.

Zur Lösung dieser Aufgabe wird erfindungsgemäß eine Probenmanipulationseinrichtung gemäß Anspruch 1 vorgeschlagen,zum Abnehmen von Deckeln von Probengefäßen und/oder zum Aufsetzen von Deckeln auf Probengefäße, umfassend eine Probeneinheit und eine Manipulationseinheit mit wenigstens einem Manipulationswerkzeug. Das Manipulationswerkzeug ist zum Abnehmne und Aufsetzen eines Deckels auf ein Probengefäß ausgebildet. Die Probeneinheit und die Manipulationseinheit relativ sind zueinander entlang einer Verfahrrichtung verfahrbar. Die Probeneinheit weist wenigstens eine Probenträgeraufnahme zur Aufnahme wenigstens eines sich in einer Längsrichtung und einer orthogonal zur Längsrichtung stehenden Querrichtung erstreckenden Probenträgers zum Halten eines oder mehrerer Probengefäße auf. Die Probeneinheit ist ferner überführbar zwischen einer ersten Orientierung, in der die Längsrichtung eines in der Probenträgeraufnahme aufnehmbaren Probenträgers parallel zu der Verfahrrichtung zwischen Probeneinheit und Manipulationseinheit ist, und einer zweiten Orientierung, in der die Querrichtung eines in der Probenträgeraufnahme aufnehmbaren

Probenträgers parallel zu der Verfahrrichtung zwischen Probeneinheit und Manipulationseinheit ist.

Die Probeneinheit und/oder die Manipulationseinheit soll insbesondere in dem Sinne in der Verfahrrichtung zwischen einer Vorschubrichtung und/oder in einer zur Vorschubrichtung entgegengesetzten Rückzugsrichtung verfahrbar sein, so dass es möglich ist, die Probeneinheit relativ zur Manipulationseinheit zwischen einer Manipulationsstellung - in dieser bearbeitet das Manipulationswerkzeug die im Probenträger aufgenommene Probe - und einer Ruhestellung bzw. ggf einer Ablagestellung - in diesen befindet sich das Manipulationswerkzeug in der Verfahrrichtung in einem vorbestimmten Abstand von der im Probenträger aufgenommenen Probe - zu verlagern. Die Probeneinheit und/oder die Manipulationsienheit soll insbesondere in der Verfahrrichtung linear beweglich gelagert sein.

Wenn im Folgenden von Probenträger die Rede ist, ist regelmäßig ein in die Probenträgeraufnahme eingesetzter Probenträger gemeint, es sei den es liegt eine gegenteilige Beschreibung vor. Die Probenträgeraufnahme ist dabei in der Regel so ausgebildet, dass der Probenträger nur in einer, oder allenfalls abzählbar vielen ausgewählten Orientierungen in die Probenträgeraufnahme einsetzbar ist.

Mit dem Begriff der Überführkeit der Probeneinheit zwischen erster und zweiter Orientierung soll in erster Linie ausgedrückt sein, dass die Probeneinheit derart ausgebildet ist, dass ein in der Probenträgeraufnahme aufgenommener Probenträger zwischen der ersten und der zweiten Orientierung überführbar ist. D.h. der in die Probenträgeraufnahme eingesetzte Probenträger soll aus der ersten Orientierung in die zweite Orientierung überführt werden können und umgekehrt. Das kann im einfachsten Fall dadurch geschehen, dass die Probenträgeraufnahme so ausgebildet hat, dass der Probenträger wahlweise in der ersten oder in der zweiten Orientierung in die Probenträgeraufnahme eingesetzt werden kann. Dann kann man durch Herausnehmen eines in der ersten Orientierung in die Probenträgeraufnahme eingesetzten Probenträgers und Einsetzen desselben Probenträgers oder eines anderen Probenträgers mit gleicher oder wenigstens kompatibler Konfiguration in die Probenträgeraufnahme in der zweiten Orientierung die angesprochene Überführung zwischen erster und zweiter Orientierung herbeiführen. Eine dementsprechende Konfiguration wird im Folgendn noch in Bezug auf eine optionale Probendeckelträgeraufnahme näher erläutert werden. Auf diese Ausführungen, die sinngemäß auch hier gelten, wird zur Vermeidung von Wiederholungen hingewiesen.

Weitaus günstiger ist es jedoch, wenn die Probeneinheit in einer solchen Weise ausgebildet ist, dass der Probenträger zur Überführung aus der ersten in die zweite Orientierung, oder umgekehrt, nicht aus der Probenträgeraufnahme entnommen werden muss. Dann wird in der Regel die Probenträgeraufnahme selbst beweglich ausgeführt sein.

Auch wenn sich die Lage des Probenträgers zum Manipulationswerkzeug bei Überführung der Probeneinheit zwischen erster und zweiter Orientierung ändert, ist mit einer eine solchen Überführung der Probeneinheit im Allgemeinen noch keine Verlagerung der Probeneinheit gegenüber der Manipulationseinheit in Verfahrrichtung verbunden. Vielmehr sind Verlagerbarkeit der Probeneinheit in Verfahrrichtung und Überführkeit der Probeneinheit zwischen erster und zweiter Orientierung in diesem Sinne in vielen Fällen unabhängig voneinander.

Insbesondere soll die Probeneinheit ferner in einer durch die Längsrichtung und Querrichtung eines in der Probenträgeraufnahme lagerichtig aufgenommenen Probenträgers aufgespannten Ebene zwischen der ersten und der zweiten Orientierung überführbar sein. In diesem Sinne soll die Überführungsrichtung zwischen erster und zweiter Orientierung parallel zu dieser Ebene sein. Außerdem wird in der Regel ein lagerichtig in der Probenträgeraufnahme aufgenommener Probenträger in Betriebsposition im Wesentlichen horizontal angeordnet sein. Dies gilt beispielsweise bei einer Einrichtung zur Manipulation von flüssigen Proben.

Die Überführkeit der Probeneinheit zwischen erster und zweiter Orientierung gestattet eine recht einfache und schnell realisierbare Möglichkeit, Probenträger unterschiedlicher Formate nacheinander in der Probenträgeraufnahme einzusetzen und zu behandeln. Die Probenträger können immer in derselben Weie in die Probenträgeraufnahme eingesetzt werden und dann erst die Probeneinheit in die erste oder zweite Orientierung überführt werden, falls gewünscht. Aus diesem Grund ist die Variante, dass die Probenträgeaufnahme selbst zwischen erster und zweiter Orientierung verlagerbar ist, ganz besonders bevorzugt. Hierzu kann auch vorgesehen sein, dass die Probeneinheit in eine dritte Orientierung überführbar ist, in der der Probenträger in die Probenträgeraufnahme eingesetzt wird. Aus der dritten Orientierung wird die Probeneinheit dann je nach Wunsch in die erste oder zweite Orientierung überführt.

Sowohl das Einsetzen des Probenträgers als auch dessen Überführung in die erste und/oder zweite Orientierung kann weitgehend automatisiert erfolgen, so dass auch die aufeinanderfolgende Behandlung von Proben, die in unterschiedlichen Probenträgern aufgenommen sind, problemlos automatisiert und ohne merklichen Zeitverzug abgewickelt werden kann.

Hinsichtlich der bearbeitbaren Formate kann auf die bereits erwähnten dem SBS Standard folgenden Formate verwiesen werden. Es sei noch darauf hingewiesen, dass nicht nur unterschiedliche Probenträger verarbeitet werden können, sondern auch Probengefäße unterschiedlichster Konfiguration.

In vielen Fällen wird die Abmessung des Probenträgers in Längsrichtung größer sein als in Querrichtung. Dies ist beispielsweise bei den oben genannten Probenträgern gemäß SBS-Richtlinien der (48 Probenaufnahmen in 6 Zeilen zu je 8 Probenaufnahmen; 96 Probenaufnahmen in 8 Zeilen zu je 12 Probenaufnahmen; 394 Probenaufnahmen in 16 Zeilen zu je 24 Probenaufnahmen; 1536 Probenaufnahmen in 32 Zeilen zu je 48 Probenaufnahmen; usw.). Zur lagerichtigen Aufnahme der Probenträger wird dann die zugehörige Probenträgeraufnahme in der Regel - wenigstens in groben Zügen - dementsprechend in Längsrichtung größer sein als in Querrichtung. Je nachdem, wie die größere der beiden Abmessungen des Probenträgers - im Folgenden die Längsrichtung - zur Verfahrrichtung steht, kann man in Anlehnung an gängige Papierformate dann von einer Querformat-Anordnung ("Landscape") sprechen, wenn die Probenträger mit orthogonal zur Verfahrrichtung stehender Längsrichtung bearbeitet werden sollen, bzw. dann von einer Hochformat-Anordnung ("Portrait") sprechen, wenn die Probenträger mit parallel zur Verfahrrichtung stehender Längsrichtung bearbeitet werden sollen. Die erfindungsgemäße Überführkeit der Probeneinheit zwischen erster und zweiter Orientierung erlaubt es, aufeinander folgende Probenträger beliebig in Querformat- oder in Hochformat-Anordnung in die Probenträgeraufnahme einzusetzen und/oder zu bearbeiten.

Eine ganze Reihe gängiger Probenträger weisen eine in Längsrichtung verlaufende erste Symmetrieachse und eine in Querrichtung verlaufende zweite Symmetrieachse auf, die orthogonal zu der ersten Symmetrieachse ist. Auch die zur Aufnahme derartiger Probenträger vorgesehene Probenträgeraufnahme wird dann in der Regel eine etsprechende Symmetrie aufweisen. Dies ist beispielsweise bei im Wesentlichen rechteckigen Probenträgern wie den genannten SBS-Probenträgern der Fall, wobei auch die zur Aufnahme derartiger Probenträger vorgesehene Probenträgeraufnahme im Wesentlichen rechteckig und komplementär zum Probenträger sein wird. Die Formulierung "im Wesentlichen" soll hierbei darauf hinweisen, dass durchaus gewisse Abweichungen von der Grundform auftreten können, beispielsweise in Form einer abgeschrägten Ecke oder von Vorsprüngen, um dafür zu sorgen, dass ein Probenträger - jweils bezogen auf die erste oder zweite Orientierung - nur in einer einzigen "lagerichtigen" Orientierung in die zugehörige Probenträgeraufnahme eingesetzt werden kann.

Zur Überführung zwischer erster Orientierung und zweiter Orientierung bietet es sich an, die Probenträgeraufnahme um eine zu der durch die Längsrichtung und die Querrichtung aufgespannte Ebene orthogonale Drehachse, insbesondere um eine vertikale Drehachse, drehbar auszugestalten. Dann dreht sich ein in die Probenträgeraufnahme eingesetzter Probenträger bei Drehung der Probenträgeraufnahme mit, bleibt dabei aber immer innerhalb der durch den Probenträger aufgespannten Ebene. Ordnet man zudem die Drehachse - bezogen auf einen in der Probenträgeraufnahme aufgenommenen Probenträger - zentral an, so ergibt sich ein besonders platzsparender Aufbau der Probeneinheit. Zudem bleibt die Lage der Probenträgeraufnahme in Bezug auf die Verfahrrichtung in der ersten Orientierung und der zweiten Orientierung gleich. Beispielsweise liegen bei rechteckiger Probenträgeraufnahme zur Aufnahme rechteckiger Probenträger in beiden Orientierungen die jeweiligen in Verfahrrichtung zeigenden Symmetrieachsen genau übereinander. Damit kann das Manipulationswerkzeug in beiden Orientierungen der Probeneinheit jeweils gleiche Bewegungsmuster ausführen. Zentral angeordnet soll in diesem Zusammenhang in der Weise verstanden werden, dass die Drehachse innerhalb des Umrisses des in die Probenträgeraufnahme eingesetzten Probenträgers liegt, mit möglichst gleichem Abstand zu den Rändern des Probenträgers. In einer Ausführungsform kann die Drehachse beispielsweise in vertikaler Richtung verlaufen und schneidet sowohl die erste als auch die zweite Symmetrieachse schneiden.

Zur Überführung der Probeneinheit zwischen erster und zweiter Orientierung kann die Probenmanipulationseinrichtung ferner einen auf einen in der Probenträgeraufnahme aufgenommenen Probenträger zur Drehung desselben wenigstens zwischen der ersten und der zweiten Orientierung einwirkenden Drehantrieb aufwiesen. Hierzu bietet sich insbesondere ein elektrischer Servoantrieb an. In vielen Fällen kann die Probenträgeraufnahme drehfest mit einem um eine vertikale Achse drehbaren Probentisch gekoppelt sein. Dann kann der Drehantrieb bequem auf einen derartigen Probentisch einwirken. In dem Probentisch kann zudem auch die Probenträgeraufnahme ausgebildet sein, so dass der Drehantrieb unmittelbar auf das Bauteil einwirkt, in dem die Probenträgeraufnahme ausgebildet ist.

Konstruktiv kann man beispielsweise so vorgehen, dass am Probentisch wenigstens eine kreisförmige Umfangsfläche ausgebildet ist, mit der der Drehantrieb zusammenwirkt. Je nach Durchmesser dieser Umfangsfläche kann dabei eine gewünschte Untersetzung realisiert werden, so dass ein Servoantrieb mit hoher Nenndrehzahl, aber entsprechend geringem Nenndrehmoment eingesetzt werden kann. Damit lässt sich ein kompakter und kostengünstiger Antrieb realisieren, durch den die Verstellung der Probeneinheit zwischen erster Orientierung und zweiter Orientierung, ggf. auch weiterer Orientierungen falls gewünscht, kostengünstig - und falls gewünscht zudem automatisiert - realisierbar ist.

Beispielsweise kann der Drehantrieb in der Art eines Direktantriebs ausgebildet sein. In einer Ausführungsform als formschlüssig wirkender Direktantrieb kann die kreisförmige Umfangsfläche des Probentischs eine Verzahnung aufweisen, die mit einem Ausgangsritzel des Drehantriebs zusammenwirkt. In einer alternativen reibschlüssig wirkenden Variante kann die kreisförmige Umfangsfläche auch eine Treibfläche aufweisen, die reibschlüssig mit einem Ausgangsrad des Drehantriebs zusammenwirkt. Neben der Variante als Direktantrieb sind auch andere Varianten denkbar, etwa dass der Drehantrieb per Zahnriemen oder Treibriemen auf eine kreisförmige Umfangsfläche des Probentischs einwirkt.

Erfindungsgemäß ist die Probenträgeraufnahme drehbar in einem in der Verfahrrichtung verlagerbaren Probenschlitten gelagert. Damit lässt sich die Bewegung der Probeneinheit relativ zum Manipulationswerkzeug - etwa um das Manipulationswerkzeug oberhalb einer jeweiligen im Probenträger aufgenommenen Probe anzuordnen bzw. bei Bearbeitung einer Probe durch das Manipulationswerkzeug - recht einfach von der Bewegung der Probenträgeraufnahme zur Überführung der Probeneinheit zwischen erster und zweiter Orientierung trennen. Probentisch und Probenschlitten können durchaus einteilig ausgebildet sein, sofern dafür Sorge getragen wird, dass der Drehantrieb zur Überführung der Probeneinheit zwischen erster und zweiter Orientierung in einer solchen Weise am Probentisch angreift, dass dieser sich nicht zugleich auch in Verfahrrichtung bewegt. Ggf. sind dann entsprechende Brems- bzw. Blockiereinrichtungen vorzusehen. Häufig wird es konstruktiv günstiger sein, den Probentisch und den Probentschlitten als separate Bauteile auszuführen. Dann kann nämlich der Probentisch drehbar in/an dem Probenschlitten gelagert sein, so dass der auf den Probentisch einwirkende Drehantrieb in der Regel keine Auswirkungen auf die Relativstellung des Probenschlittens gegenüber dem Manipulationswerkzeug hat. Um den Probenschlitten zusätzlich in Verfahrrichtung zu bewegen, kann dann beispielsweise ein in Vorschubrichtung und/oder in einer zur Vorschubrichtung entgegengesetzten Rückzugsrichtung auf den Probenschlitten vorgesehener Linearantrieb vorgesehen sein.

Erfindungsgemäß weist der Probenschlitten - zusätzlich zu der Probenträgeraufnahme - eine Probendeckelträgeraufnahme auf, in welcher ein dem jeweiligen Probenträger zugeordneter Probendeckelträger aufnehmbar ist. Dann können nämlich von den im Probenträger gehaltenen Proben abgenommene Deckel ohne Weiteres in dem zugehörigen Probendeckelträger - zeitweilig oder falls gewünscht auch dauerhaft - abgelegt werden. Dazu weist der Probendeckelträger eine im Wesentlichen dem Probenträger entsprechende Konfiguration in Bezug auf die Anordnung der einzelnen Probenaufnahmen bzw. Probendeckelaufnahmen auf. Bei zwischen der ersten und der zweiten Orientierung überführbarer Probenträgeraufnahme ist auch die Probendeckelträgeraufnahme derart ausgebildet, dass sowohl in der ersten Orientierung der Probenträgeraufnahme als auch in der zweiten Orientierung der Probenträgeraufnahme der jeweils zugehörige Probendeckelträger in Bezug zum jeweiligen in der Probenträgeraufnahme aufgenommenen Probenträger lagerichtig angeordnet ist.

Wenn beispielsweise die Probenträgeraufnahme in Hochformat-Anordnung orientiert ist, sollte auch die zugehörige Probendeckelträgeraufnahme in Hochformat-Anordnung orientiert sein. Entsprechendes gilt bei in Querformat-Anordnung orientierter Probenträgeraufnahme. Hierzu wird erfindungsgemäß eine Probendeckelträgeraufnahme vorgesehen, die - in einer Draufsicht - einen Umriss hat, der sich aus der Vereinigung der Umrisse zweier in einem Winkel von 90 Grad um deren gemeinsame Drehachse zueinander verdrehter Probenträgeraufnahmen ergibt. Die Probendeckelträgeraufnahme hat dann in Draufsicht einen im Wesentlichen kreuzförmigen Umriss.

Die Probendeckelträgeraufnahme kann mit einem stationären Probendeckelträger ausgebildet sein. Dieser sollte dann bevorzugt so ausgebildet sein, dass er die Konfiguration eines in erster Orientierung angeordneten Probendeckelträgers und eines in zweiter Orientierung angeordneten Probendeckelträgers vereinigt. Flexibler ist man jedoch, wenn nur die Probendeckelträgeraufnahme in dem Probenschlitten stationär ausgebildet ist und die jeweils passenden Probendeckelträger in die Probendeckelträgeraufnahme eingesetzt werden. Auch dann kann so vorgehen, dass der Probendeckelträger die Konfiguration eines in erster Orientierung angeordneten Probendeckelträgers und eines in zweiter Orientierung angeordneten Probendeckelträgers vereinigt.

Zur Verlagerung der Probeneinheit relativ zu einer feststehenden Manipulationseinheit kann die Probenmanipulationseinrichtung ferner einen auf die Probeneinheit wirkenden Linearantrieb aufweisen. Dieser kann beispielsweise durch einen elektrischen Servoantrieb mit entsprechenden Linearführungselementen und/oder Linearantriebselementen wie beispielsweise einer Gewindespindel ausgebildet sein. Der Linearantrieb kann in platzsparender Weise unterhalb der Probeneinheit angeordnet sein. Insbesondere kann der Linearantrieb an dem Probenschlitten seitlich und/oder von unten her angreifen. Dies ist besonders dann günstig, wenn das Manipulationswerkzeug - wie zum Abnehmen bzw. Aufsetzen von Deckeln meist üblich - von oben her an den Probenschlitten herangeführt wird.

Das Manipulationswerkzeug kann um eine vertikale Achse drehbar und in vertikaler Richtung verfahrbar an der Manipulationseinheit angebracht sein, so dass es von oben her an die Probeneinheit herangeführt werden kann. Beispielsweise kann das Manipulationswerkzeug an der Manipulationseinheit aufgehängt sein, d.h. sich von oben nach unten erstreckend an einer Tragstruktur angebracht sein, wobei die Tragstruktur selbst in mindestens einer Richtung, beispielsweise in vertikaler Richtung verfahrbar ist.

Zur gleichzeitigen Bearbeitung von mehreren in einer Reihe angeordneten Probengefäßen kann die Manipulationseinheit eine Mehrzahl von Manipulationswerkzeugen aufweisen, die in einer Richtung orthogonal zu der durch die Verfahrrichtung definierten vertikalen Ebene aufgereiht sind.

In besonders günstiger Konfiguration kann die Probenmanipulationseinrichtung eine Manipulationseinheit aufweisen, welche über einen auswechselbar an einem Werkzeugträger angebrachten Werkzeugkopf verfügt, wobei der Werkzeugkopf - in Ankoppelstellung - als Ganzes in Vertikalrichtung verfahrbar ist und das wenigstens eine Manipulationswerkzeug um eine vertikale Achse drehbar am Werkzeugkopf angebracht ist. Diese Konfiguration erlaubt es, die Manipulationseinheit schnell und flexibel zur Bearbeitung verschiedenster Probenträger und sogar verschiedenster Probengefäße anzupassen, indem einfach der vorhandene Werkzeugkopf vollständig ausgetauscht wird. Die hier beschriebene Konfiguration mit auswechselbarem Werkzeugkopf erscheint vorteilhaft.

In weiterer bevorzugter Ausgestaltung kann die Probenmanipulationseinrichtung ferner eine Probengefäßidentifikationsvorrichtung aufweisen zur Identifikation des Probenträgers und/oder einzelner Probengefäße, welche sich in dem - in die Probenträgeraufnahme eingesetzten - Probenträger befinden. Die Probengefäßidentifikationseinrichtung kann in platzsparender Weie derart ausgebildet sein, dass sie am Boden eines jeweiligen Probengefäßes befindliche Identifikationsmuster erkennen kann. Dies kann etwa durch einen optischen Sensor geschehen.

Die Erfindung wird nachfolgend unter Bezugnahme auf in den Figuren gezeigte Ausführungsbeispiele näher erläutert. Es zeigt:
- Fig. 1:: In perspektivischer Ansicht eine Ausführungsform einer erfindungsgemäßen Probenmanipulationseinrichtung mit Probenträger und Probendeckelträger in Hochformat-Orientierung.
- Fig. 2:: In perspektivischer Ansicht dieselbe erfindungsgemäße Probenmanipulationseinrichtung mit Probenträger und Probendeckelträger in Querformat-Orientierung.
- Fig. 3:: Eine weitere Ansicht aus anderer Perspektive ohne Probenträger und Probendeckelträger, mit Probenträgeraufnahme in Querformat-Orientierung und kreuzförmiger Probendeckelträgeraufnahme.
- Fig. 4A:: In perspektivischer Ansicht von unten einen Probenschlitten samt Probentisch mit Drehantrieb zur Überführung der Probenträgeraufnahme zwischen erster und zweiter Orientierung.
- Fig. 4B:: In perspektivischer Ansicht von oben einen Aufsatz auf den Probentisch aus Fig. 4A mit darin ausgebildeter Probendeckelträgeraufnahme.
- Fig. 4C:: In Seitenansicht den Probenschlitten aus Fig. 4A mit dem Aufsatz aus Fig. 4B.
- Fig. 5:: Die Probenmanipulationseinrichtung aus Fig. 3 mit abgenommenen Werkzeugkopf.
- Fig. 6:: Den Werkzeugkopf aus Fig. 5 in vergrößerter Schnittansicht.
- Fig. 7A und 7B:: Den Werkzeugkopf aus Fig. 5 in Seitenansicht mit jeweils unterschiedlicher Anzahl von Werkzeugen zum Aufschrauben bzw. Abschrauben von Deckeln.

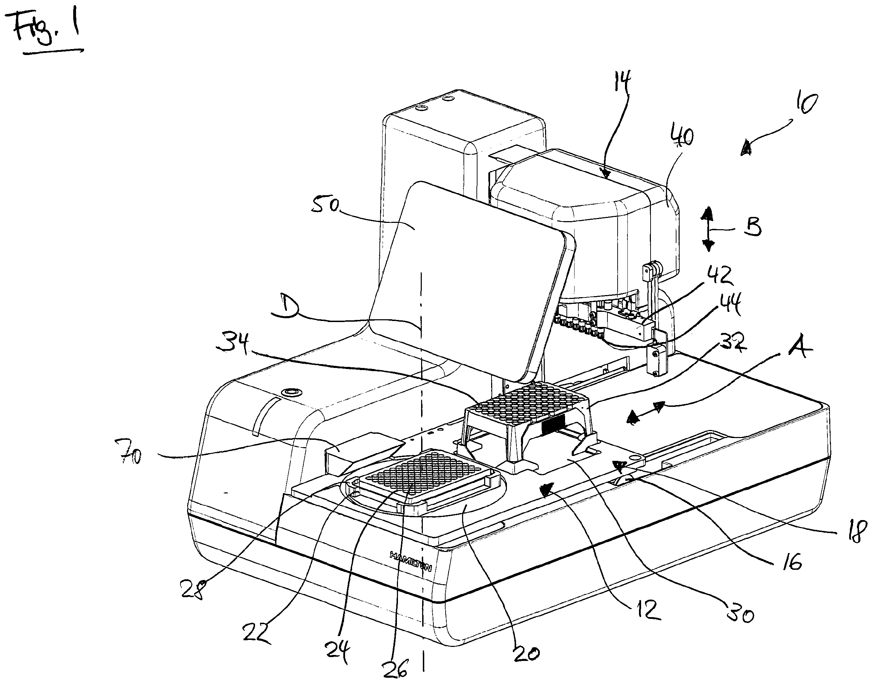

Die in Fig. 1 gezeigte perspektivische Ansicht einer beispielhaften Ausführungsform einer erfindungsgemäßen Probenmanipulationseinrichtung 10 weist eine allgemein mit 12 bezeichnete Probeneinheit und eine allgemein mit 14 bezeichnete Manipulationseinheit auf. Probeneinheit 12 und Manipulationseinheit 14 sind in einer durch einen Doppelpfeil A angedeuteten Verfahrrichtung relativ zueinander linear verlagerbar. Bei der in Fig. 1 gezeigten Ausführungsform liegt die Verfahrrichtung in einer horizontalen Ebene. Die beschriebene Relativverlagerung zwischen Probeneinheit 12 und Manipulationseinheit 14 in der Verfahrrichtung erfolgt bei der in Fig. 1 gezeigten Ausführungsform dadurch, dass die Probeneinheit 12 mittels eines Linearantriebs, von dem in Fig. 1 ein Ausgangstreibrad 16 unterhalb der Probeneinheit 12 zu sehen ist, gegenüber der Manipulationseinheit 14, die jedenfalls in Verfahrrichtung A nicht beweglich ist, in einer Vorschubrichtung (in Fig. 1 nach schräg hinten) oder in einer Rückzugsrichtung (in Fig. 1 schräg nach vorn), bewegbar ist. Das Ausgangstreibrad 16 des Linearantriebs wirkt auf die Unterseite eines Probenschlittens 18 der Probeneinheit 12. Der Probenschlitten 18 selbst ist an einer im Gehäuse der Probenmanipulationseinheit 10 ausgebildeten Linerarführungsanordnung in Verfahrrichtung A beweglich geführt.

Die Probeneinheit 12 umfasst neben dem Probenschlitten 18 einen Drehtisch 20, der um eine orthogonal zum Drehtisch stehende Drehachse drehbar gelagert ist. Die Drehachse ist in Fig. 1 strichpunktiert angedeutet und mit D bezeichnet. Bei der in Fig. 1 gezeigten horizontalen Ausrichtung des Probentischs 18 verläuft die Drehachse D in vertikaler Richtung.

In dem Drehtisch 20 ist eine Probenträgeraufnahme 22 ausgebildet, in welche ein in Fig. 1 mit 24 angedeuteter Probenträger einsetzbar ist. Der Probenträger 24 hat in Fig. 1 eine im Wesentlichen rechteckige Form mit einer längeren Längsseite und einer kürzeren Querseite. Im Probenträger 24 sind in matrixartiger Weise eine Mehrzahl von einzelnen Probenaufnahmen ausgebildet, von denen in Fig. 1 eine beispielhaft mit 26 bezeichnet ist. Die Probenaufnahmen 26 sind in Reihen und Spalten angeordnet, wobei nach dem hier verwendeten Sprachgebrauch in betriebsgemäßer Stellung des Probenträgers 24 eine Reihe immer quer zur Verfahrrichtung A zeigen soll und eine Spalte immer in Verfahrrichtung zeigen soll. Der Probenträger 24 ist in dem Sinne einer jeweiligen Probenträgeautnahme 22 zugeordnet, dass der jeweilige Probenträger 24 in zwei um 90 Grad zueinander verdrehten Orientierungen in die jeweilige Probenaufnahme 24 passt. Die Umrisse von Probenträger 22 und jeweils zugeordneter Probenträgeaufnahme 24 entsprechen einander also weitgehend. Bei der in Fig. 1 gezeigten Variante ist eine solche Entsprechung in der Weise realisiert, das die Probenträgeaufnahme an vier Eckbereichen jeweils eine erhöhte Umrandung 28 aufweist, so dass die vier Umrandungen gemeinsam den Umriss eines Rechtecks definieren, dessen Abmessungen dem ebenfalls rechteckigen Umriss der Probenträger 22 entsprechen.

Die in Fig. 1 gezeigte Probenmanipulationseinrichtung 10 ist mit einer Probenträgeraufnahme 22 zur Aufnahme von Probenträgern 24 nach dem oben beschriebenen SBS Standard vorgesehen, auf deren Beschreibung hier ausdrücklich verwiesen wird. Bei der in Fig. 1 gezeigten Variante ist die Probenträgeraufnahme 22 für im Wesentlichen rechteckige SPS Probenträger 24 in einer Konfiguration mit 12 Reihen und 8 Spalten, also insgesamt 96 Probenaufnahmen, ausgebildet. Andere Probenträgerkonfigurationen bzw. Probengefäßkonfigurationen können in einfacher Weise durch Auswechseln des Drehtischs 20 bearbeitet werden. Falls die numerischen Dimensionen in Längs - und Querrichtung kompatibel sind, können unterschiedliche Konfigurationen noch einfacher durch Auswechseln nur der jeweiligen Probenträgeraufnahme 22 und ohne Auswechseln des Drehtischs 20 bearbeitet werden.

Die Probeneinheit 12 weist weiterhin eine Probenträgerdeckelaufnahme 30 auf, in die ein in Fig.1 mit 32 bezeichneter Probendeckelträger einsetzbar ist. Im Probendeckelträger 32 sind eine Mehrzahl von Probendeckelaufnahmen ausgebildet, von denen in Fig. 1 eine beispielhaft mit 34 bezeichnet ist. Der Probendeckelträger 32 besitzt eine Konfiguration die - insbesondere hinsichtlich der matrixartigen Anordnung der Probendeckelaufnahmen 34 in Reihen und Spalten - derjenigen des in der Probenträgeraufnahme 22 eingesetzten Probenträgers 24 entspricht. Die einzelnen Probendeckelaufnahmen 34 des Probendeckelträgers 32 sind zur Aufnahme eines Deckels eines Probengefäßes ausgebildet, welches sich in der jeweils zugeordneten Probenaufnahme 26 des Probenträgers 24 befindet.

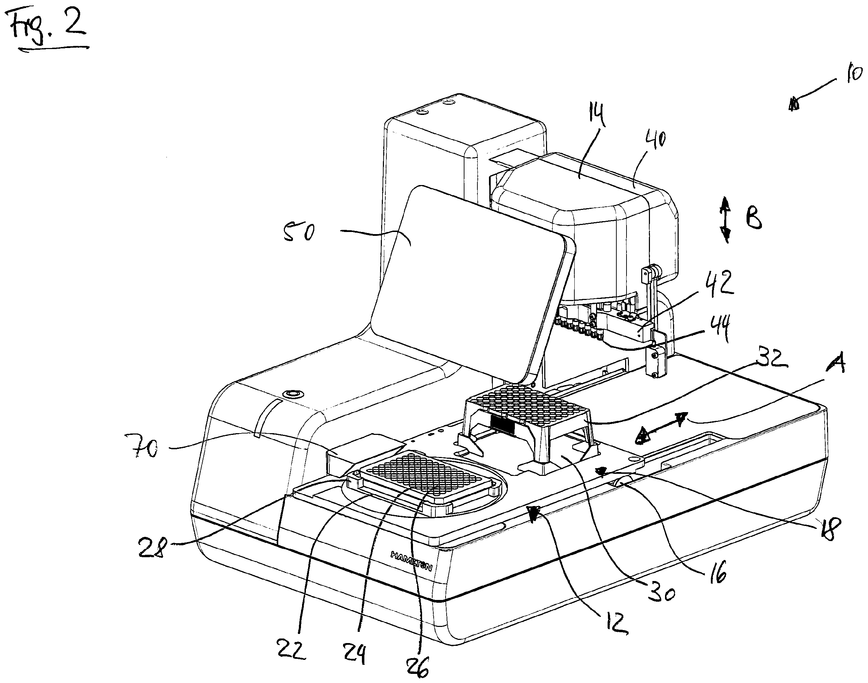

insbesondere sind in Fig. 1 sowohl der Probenträger 24 wie auch der Probendeckelträger 32 in einer Hochformat-Anordnung orientiert, d.h. so dass ihre Längsseiten in Richtung der Verfahrrichtung A zeigen. Entsprechendes gilt für eine alternative Anordnung, in der sowohl der Probenträger 24 wie auch der Probendeckelträger 32 in einer Querformat-Anordnung orientiert sind, d.h. so dass ihre Längsseiten quer zu der Verfahrrichtung A zeigen (siehe beispielsweise Fig. 2). Dies erleichtert viele Prozessabläufe, beispielsweise das Aufsetzen von Deckeln auf ein Probengefäß bzw. Abnehmen der Deckel von einem Probengefäß, Transport von Deckeln vom Probenträger 24 zum Probendeckelträger 32 bzw. umgekehrt, oder Ablegen von Deckeln im Probendeckelträger 34 bzw.Aufnehmen von Deckeln vom Probendeckelträger 34, beträchtlich und gestattet insbesondere einen Prozessablauf, bei dem Kontamination von bereits geöffneten Proben effektiv vermieden werden kann. Die Probendeckelträgeraufnahme 32 weist einen - von oben gesehen - im Wesentlichen kreuzförmigen Umriss auf, der sich aus der Vereinigung von zwei im Winkel von 90° zueinander um ihren Mittelpunkt verdrehten Probendeckelträgeraufnahmen ergibt, die jeweils einem Probenträger 24 in Hochformat Anordnung und einem Probenträger 24 in Querformat-Anordnung zugeordnet sind. Damit ist ein Probendeckelträger 34 in der Probendeckelträgeraufnahme 32 in vier jeweils um 90 Grad zueinander verdrehten Orientierungen einsetzbar.

Die Manipulationseinheit 14 umfasst einen Werkzeugkopf 40 mit einem Werkzeugträger 42. Der Werkzeugträger 42 hat die Konfiguration eines quer, insbesondere orthogonal, zur Verfahrrichtung A angeordneten Balkens. An dem Werkzeugträger 42 sind nebeneinander eine Mehrzahl von Manipulationswerkzeugen angebracht, von denen eines in Fig. 1 beispielhaft mit 44 bezeichnet ist. Die Manipulationswerkzeuge 44 sind jeweils für sich um eine orthogonal zum Werkzeugträger 42 stehende Achse drehbar gelagert. Sie werden jeweils zur Drehung um ihre Achse durch einen im Werkzeugkopf 40 untergebrachten Serveoantrieb angetrieben. Die einzelnen Manipulationswerkzeuge 44 dienen jeweils zum Abnehmen bzw. Aufsetzen von Deckeln von bzw. auf Probengefäße. Bei der in Fig. 1 gezeigten Variante geschieht durch Aufschrauben bzw. Abschrauben der Deckel nach Heranführen des jeweiligen Werkzeuges 24 zu dem zugeordneten Deckel. Erfindungsgemäß umfasst die Manipulationseinheit 14 das Manipulationswerkzeug 44, welches zum Abnehmen bzw. Aufsetzen von Deckeln von bzw. auf Probengefäße dient.

Die in Fig. 1 gezeigte Probenmanipulationseinheit 10 umfasst ferner einen berührungsempfindlichen Bildschirm 50, über den Steuerbefehle eingegeben werden können, bzw. der Statusinformation und weitere relevante Informationen während des Betriebsablaufs anzeigt. Im unteren Bereich etwa auf Höhe der in die Probenträgeraufnahme 24 eingesetzten Probengefäße ist ferner eine Probenidentifikationseinrichtung 70 vorgesehen, die derart angeordnet ist, dass sie Identifikationsmuster erkennen kann, welche auf den Probengefäßen angebracht sind. Dies erleichtert die automatisierte Durchschleusung von Proben in großer Anzahl. Insbesondere ist die Probenidentifikationseinrichtung 70 derart angeordnet, dass sie am Boden von einzelnen Probengefäßen befindliche Identifikationsmuster erfassen kann. Diese Erfassung kann insbesondere mit Hilfe eines geeignet angebrachten optischen Sensors erfolgen.

Fig. 2 zeigt in perspektivischer Ansicht entsprechend Fig. 1 eine Ausführungsform derselben erfindungsgemäßen Probenmanipulationseinrichtung 10 mit Probenträger 24 und Probendeckelträger 32 in Querformat-Orientierung, in der die Längsseiten sowohl des Probenträgers 24 als auch des Probendeckelträgers 32 orthogonal zur Verfahrrichtung A verlaufen. In der Querformat-Orientierung enthalten die Reihen also mehr Probengefäße als die Spalten. Dies lässt einen größeren Durchsatz zu, falls die Manipulationseinheit 14 über eine entsprechend große Anzahl von Manipulationswerkzeugen 44 verfügt. Die in Fig. 2 verwendeten Bezugszeichen entsprechen denen von Fig. 1. Es wird zur Vermeidung von Wiederholungen auf die Beschreibung in Fig. 1 verwiesen. Erfindungsgemäß ist die Probeneinheit 12 zwischen einer ersten Orientierung, nämlich der in Fig. 1 gezeigten Hochformat-Orientierung, und einer zweiten Orientierung, nämlich der in Fig. 2 gezeigten Querformat-Orientierung überführbar. Die Überführung zwischen erster und zweiter Orientierung geschieht so, dass die Probenträgeraufnahme 22 zwischen der in Fig. 1 gezeigten ersten Orientierung und der in Fig. 2 gezeigten zweiten Orientierung verlagerbar ist. Diese Verlagerung kann grundsätzlich händisch erfolgen. Bequemer ist es aber, wenn wie in Fig. 1 bis 6 der Fall, die Überführung zwischen erster Orientierung und zweiter Orientierung mit Hilfe eines Antriebs erfolgt. Hierzu kann ein elektrischer Servoantrieb vorgesehen sein, der nachfolgend noch etwas genauer beschrieben wird.

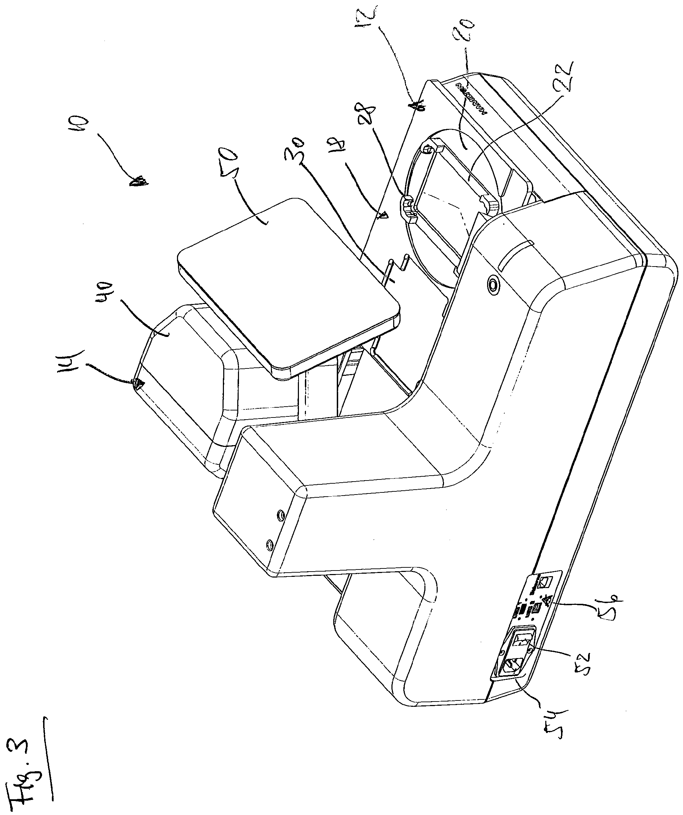

Bei der in Fig. 3 gezeigten Ansicht der Probenmanipulationseinrichtung 10 aus einer Perspektive von hinten in Fig. 1 bzw. 2 sind weder Probenträger noch Probendeckelträger in ihre jeweilige Aufnahme eingesetzt. Die Probenträgeraufnahme 22 befindet sich in Querformat-Orientierung. Deutlich ist der kreuzförmige Umriss der Probendeckelträgeraufnahme 30 zu erkennen, der sowohl eine mit der Probenträgeraufnahme 22 in Querformat-Orientierung also auch eine mit der Probenträgeraufnahme 22 in Hochformat-Orientierung kompatible Umrissgestaltung enthält.

Neben den bereits mit Bezug zu anderen Figuren beschriebenen Komponenten, auf deren anderweitige Beschreibung hier ausdrücklich verwiesen sei, sieht man in der Darstellung gemäß Fig. 3 noch einen Versorgungsanschluss 54 zum Anschluss an ein Stromnetzwerk sowie einen Ein/Aus-Schalter 52 und eine Reihe von allgemein mit 56 bezeichneten Anschlüssen zum Anschluss an ein internes oder externes Computernetz, entweder drahtgebunden oder drahtlos.

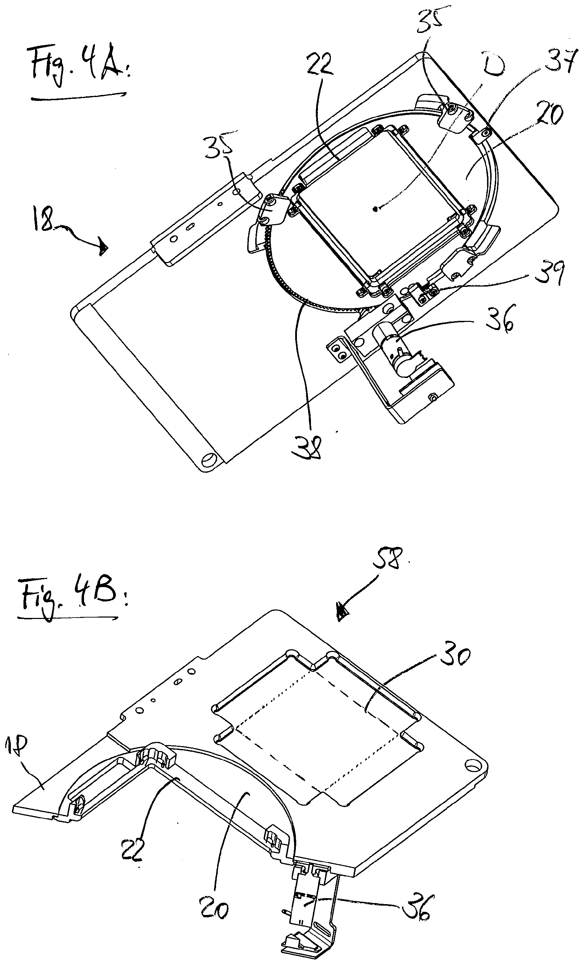

Fig. 4A zeigt in perspektivischer Ansicht von unten einen Probenschlitten 18 samt Drehtisch 20, in dem die Probenträgeraufnahme 22 ausgebildet ist. An der Unterseite des Drehtischs 20 ist ein Drehantrieb 36 - in dieser Ausführungsform in Form eines elektrischen Servoantriebs - angebracht. Das Ausgangsritzel des Drehantriebs 36 steht mit einer Verzahnung 38 in Eingriff, die an einer kreisförmigen Umfangsfläche des Drehtischs 20 in einem Sektorbereich von mindestens 90° vorgesehen ist. Damit treibt der Drehantrieb 36 über die Verzahnung 38 den Drehtisch 20 direkt an, um die Probenträgeraufnahme 22 aus ihrer ersten Orientierung (Hochformat-Orientierung) in ihre zweite Orientierung (Querformat-Orientierung) zu überführen, oder umgekehrt. Als Drehantrieb 36 kann ein schnell drehender und damit - für gegegene Nennleistung - kompakter elektrischer Servoantrieb (z.B. Gleichstrommotor oder bürstenloser Gleichstrommotor) eingesetzt werden, dessen hohe Drehzahl über den als Untersetzungsgetriebe wirkenden Eingriff zwischen Ausgangsrad des Drehantriebs 36 und Verzahnung 38 in eine langsamere Drehung des Drehtischs 20 um die in Fig. 3 als Punkt angedeutete Drehachse D umgesetzt wird. Wegen der Untersetzung entsteht ein ausreichend großes Drehmoment, um den Drehtisch 20, ggf. inclusive Probenträger 24 und aller in dem Probenträger 24 aufgenommenen Probengefäße in Drehung zu versetzen und bei Erreichen der ersten bzw. zweiten Orientierung wieder anhalten zu können. Das genaue Anfahren und Einhalten der ersten bzw. zweiten Orientierung wird mit Hilfe von wenigstens einem Drehwinkelsensor 39 überwacht, der ebenfalls an der Unterseite des Probenschlittens 20 entlang des Umfangs des Drehtischs 20 und diesem zugewandt angebracht ist. Zur drehbaren Lagerung des Drehtischs 20 in dem Probenschlitten 18 sind entlang des Umfangs des Drehtischs 20 mehrere Lager 35 angebracht. Außerdem stellt ein ebenfalls am Umfang des Drehtischs 20 vorgesehener Anschlag 37 sicher, dass der Drehtisch in einer solchen Orientierung in den Probenschlitten 20 eingesetzt ist, in der die Verzahnung 38 am Umfang des Drehtischs 20 mit dem Ausgangsritzel des Drehantriebs 36 zusammenwirkt.

Fig. 4B zeigt in perspektivischer Ansicht von oben einen Aufsatz 58 auf den Probenschlitten 18 aus Fig. 4A mit darin ausgebildeter Probendeckelträgeraufnahme 30. Ebenfalls angedeutet ist ein Ausschnitt des Probenschlittens 18 sowie des gegenüber diesem drehbaren Drehtischs 20 mit darin ausgebildeter Probenträgeraufnahme 22. Gut zu erkennen ist der in Draufsicht im Wesentlichen kreuzförmige Umriss der Probendeckelträgeraufnahme 30, der sich ergibt, wenn man die Umrisse einer in Querformat orientierten Probendeckelträgeraufnahme (siehe die gestrichelten Linien in Fig. 4B) mit einer in Hochformat orientierten Probendeckelträgeraufnahme (siehe die gepunkteten Linien in Fig. 4B) miteinander vereinigt. Der kreuzförmige Umriss der Probendeckelträgeraufnahme 30 gestattet es, Probendeckelträger 34 im vier um jeweils 90 Grad zueinander verdrehten Orientierungen einzusetzen.

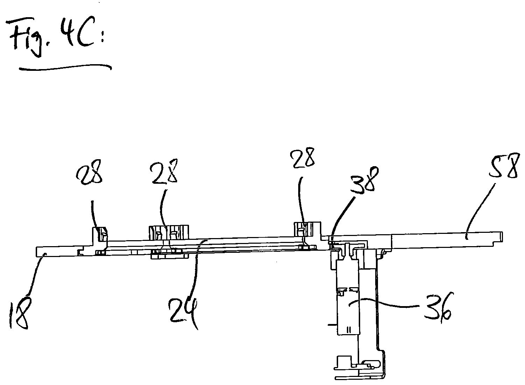

Die in Fig. 4C gezeigte Seitenansicht zeigt den Probenschlitten 18 aus Figur 4A mit dem Aufsatz 58 aus Figur 4B.

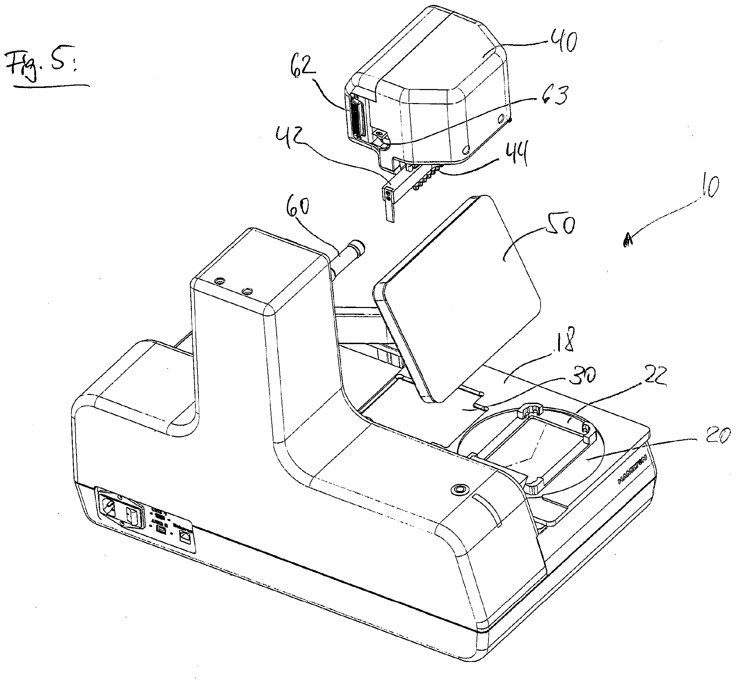

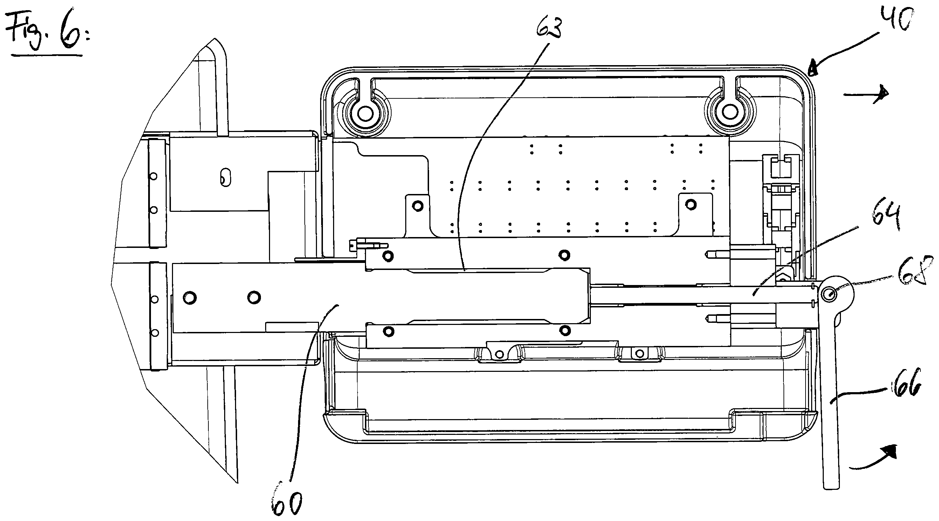

Die Fig. 5 zeigt die Probenmanipulationseinrichtung 10 aus Fig. 3 mit abgenommenen Werkzeugkopf 40. Man erkennt, dass der Werkzeugkopf 40 samt Werkzeugträger 42 und den daran aufgehängten Manipulationswerkzeugen 44 als Ganzes vom Gehäuse der Probenmanipulationseinrichtung 10 abgenommen werden kann. Die Befestigung des Werkzeugkopfs 40 am Gehäuse erfolgt hierbei über einen Achsstummel 60, der in lösbarer Weise mit dem Werkzeugkopf 40 koppelbar ist. In Koppelstellung ist der Achsstummel in eine am Werkzeugkopf 40 ausgebildete Ausnehmung 63 eingeführt (siehe auch Fig. 6). Der Achsstummel 60 selbst ist mittels eines im Gehäuse 60 untergebrachten eigenen Antriebs in vertikaler Richtung angetrieben, so dass der daran befestigte Werkzeugkopf 40 als Ganzes, d.h. samt aller am Werkzeugträger 42 aufgehängter Werkzeuge nach oben bzw. nach unten verfahren werden kann. In Fig. 5 erkennt man ebenfalls eine Seite einer elektrischen Steckerverbindung 62, die am Werkzeugkopf 40 vorgesehen ist und die bei auf dem Achsstummel 60 angebrachtem Werkzeugkopf 40 mit einer passenden Gegenverbindung am Gehäuse gekoppelt ist und so eine elektrische Verbindung zwischen Werkzeugkopf 40 und Gehäuse herstellt. Über diese Verbindung werden einerseits Steuerbefehle und -daten zur Ansteuerung des Antriebs der einzelnen Werkzeuge 44 ausgetauscht, andererseits werden auch Sensordaten zur Stellung und zum Zustand des Werkzeugkopfs 40 zu einer zentralen Steuereinheit, die sich im Gehäuse befindet, zurückgeschickt. Falls gewünscht, kann auch der Drehantrieb für die einzelnen Werkzeuge 44 im Gehäuse untergebracht sein. In diesem Fall wird die Kopplung zwischen Werkzeugkopf 42 und Achsstummel 60 so gewählt, dass im Koppelzustand ein Drehantrieb für die einzelnen Werkzeuge 44 übertragen wird.

Die Lage des Achsstummels 60 in Bezug zum Werkzeugkopf 40 in Koppelstellung lässt sich auch der Fig. 6 entnehmen, die den Werkzeugkopf 40 aus Fig. 5 in vergrößerter Schnittansicht zeigt. Auf eine Darstellung der einzelnen Werkzeuge wurde in Fig. 6 aus Gründen der besseren Übersichtlichkeit verzichtet. Man erkennt, dass der Achsstummel 60 in der im Werkzeugkopf 60 ausgebildeten Ausnehmung 63 formschlüssig und/oder reibschlüssig ankoppelt. Zum Abnehmen des Werkzeugkopfs ist eine Lösevorrichtung vorgesehen, die einen ersten auf den Achsstummel 60 einwirkenden Steg 64 sowie einen gelenkig mit diesem verbundenen Schwenkhebel 66 umfasst. Schwenkt man den Hebel 66 in der in Fig. 5 durch einen Pfeil angedeuteten Richtung nach oben, so verschiebt sich wegen der etwas exzentrischen Anordnung des Drehgelenks 68 der Steg 64 etwas auf den Achsstummel 60 zu. Da sich das Drehgelenk 68 am Werkzeugkopf 40 abstützt, wird dieser dabei gegenüber dem Achsstummel 60 in Richtung geringeren Eingriffs des Achsstummels 60 in der Ausnehmung im Werkzeugkopf 40 verschoben, so dass der Werkzeugkopf schließlich ganz außer Eingriff mit den Achsstumme gerät und abgenommen werden kann. Ein neuer Werkzeugkopf 40 kann dann einfach aufgesteckt werden.

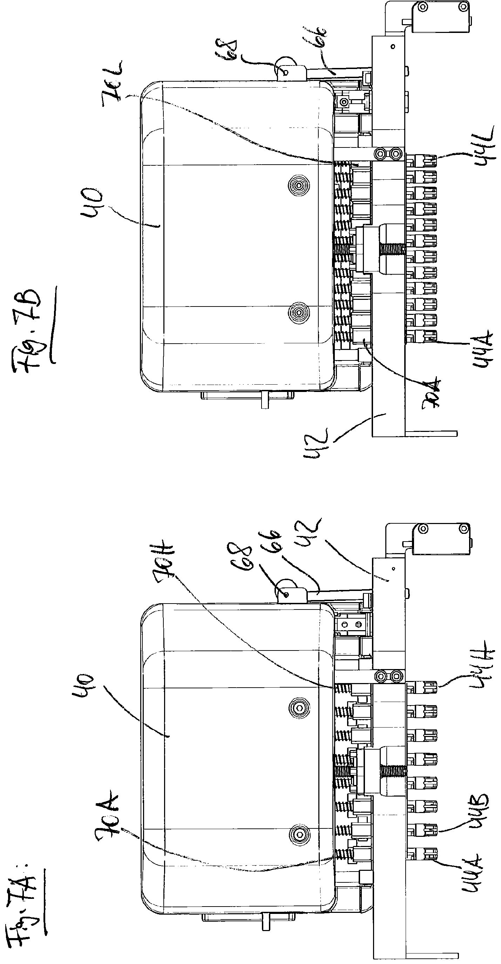

Schließlich zeigen die Fig. 7A und 7B je einen Werkzeugkopf 40 in Seitenansicht. Jeder der Werkzeugköpfe 40 kann gemäß dem in Fig. 6 gezeigten Mechanismus in einfacher Weise mit dem Achsstummel 60 gekoppelt werden bzw. von diesem gelöst werden. Der Werkzeugkopf gemäß Fig. 7A ist mit insgesamt 8 in Reihe angeordneten Manipulationswerkzeugen 44A bis 44H ausgestattet, die jeweils an dem Werkzeugträger 42 aufgehängt sind. Jedes der Werkzeuge 44A bis 44H ist um seinen zentrale Vertikalachse drehbar gelagert und über eine jeweilige Drehwelle 70A bis 70H mittels eines im Werkzeugkopf 40 untergebrachten Drehantriebs drehbar angetrieben. Die Werkzeuge 44A bis 44H sind zum Abschrauben bzw. Aufschrauben von Deckeln mit Schraubverschluss von bzw auf Probengefäße ausgebildet. Die Drehrichtung der Werkzeuge 44A bis 44H ist bevorzugt umkehrbar, so das die Werkzeuge zum Aufschrauben wie auch zum Abschrauben von Deckeln dienen können.

Im Unterschied zum Werkzeugkopf aus Fig. 7A ist der in Fig. 7B gezeigte Werkzeugkopf mit insgesamt 12 Werkzeugen 44A bis 44L ausgestattet, die ebenfalls in Reihe an dem Werkzeugträger 42 aufgehängt sind. Jedes der Werkzeuge 44A bis 44H ist über eine jeweilige vertikale verlaufende Drehwelle 70A bis 70L mit einem im Werkeugkopf untergebrachten Drehantrieb gekoppelt, wie dies auch in Bezug auf Fig. 7A beschrieben worden ist.

Bei Bearbeitung von ansonsten gleichartigen Probengefäßen, die abwechselnd in Probenträgern in Querformat-Anordnung und in Probenträgern in Hochformat-Anordnung bearbeitet werden sollen, werden die Werkzeugköpfe gemäß Fig. 7A und 7B dementsprechend abwechselnd auf den Achsstummel 60 aufgesetzt bzw. von demselben abgenommen. In dem gezeigten Beispiel mit 8 bzw. 12 Werkzeugen gilt dies für Probenträger mit SBS Format mit 96 Probengefäßen in 8 Reihen mit je 12 Probengefäßen (Querformat-Anordnung, Bearbeitung mit Werkzeugkopf 40 gemäß Fig. 7B) oder in 12 Reihen mit je 8 Probengefäßen (Hochformat-Anordnung, Bearbeitung mit Werkzeugkopf 40 gemäß Fig. 7A).

## Patentansprüche

1. Probenmanipulationseinrichtung (10) zum Abnehmen von Deckeln von Probengefäßen und/oder zum Aufsetzen von Deckeln auf Probengefäße, umfassend
eine Probeneinheit (12); und
eine Manipulationseinheit (14) mit wenigstens einem Manipulationswerkzeug (44), wobei das Manipulationswerkzeug (44) zum Abnehmen und Aufsetzen eines Deckels auf ein Probengefäß ausgebildet ist;
wobei die Probeneinheit (12) und die Manipulationseinheit (14) relativ zueinander entlang einer Verfahrrichtung (A) verfahrbar sind;
wobei die Probeneinheit (12) eine Probenträgeraufnahme (22) zur Aufnahme wenigstens eines sich in einer Längsrichtung und einer orthogonal zur Längsrichtung stehenden Querrichtung erstreckenden Probenträgers (24) zum Halten eines oder mehrerer Probengefäße aufweist;
wobei die Probeneinheit (12) ferner überführbar ist zwischen einer ersten Orientierung, in der die Längsrichtung eines in der Probenträgeraufnahme (22) aufnehmbaren Probenträgers (24) parallel zu der Verfahrrichtung (A) zwischen Probeneinheit (12) und Manipulationseinheit (14) ist, und einer zweiten Orientierung, in der die Querrichtung eines in der Probenträgeraufnahme (22) aufnehmbaren Probenträgers (24) parallel zu der Verfahrrichtung (A) zwischen Probeneinheit (12) und Manipulationseinheit (14) ist;
wobei die Probeneinheit (12) einen in der Verfahrrichtung (A) verlagerbaren Probenschlitten (18) aufweist, und wobei die Probenträgeraufnahme (22) drehbar in dem in der Verfahrrichtung (A) verlagerbaren Probenschlitten (18) gelagert ist;
wobei der Probenschlitten (18) eine Probendeckelträgeraufnahme (30) aufweist, in welcher ein dem jeweiligen Probenträger (24) zugeordneter Probendeckelträqer (32) aufnehmbar ist, wobei die Probendeckelträgeraufnahme (30) derart ausgebildet ist, dass sowohl in der ersten Orientierung der Probeneinheit (12) als auch in der zweiten Orientierung der Probeneinheit (12) der jeweils zugehörige Probendeckelträger (32) in Bezug zum jeweiligen in der Probenträgeraufnahme (22) aufnehmbaren Probenträger (24) lagerichtig aufnehmbar ist, wobei lagerichtig bedeutet, dass die Probenträgeraufnahme (22) und die Probendeckelträgeraufnahme (30) die gleiche Orientierung aufweisen; und
wobei die Probendeckelträgeraufnahme (30) - in einer Draufsicht - einen Umriss hat. der sich aus der Vereinigung der Umrisse zweier in einem Winkel von 90 Grad um deren gemeinsame Drehachse zueinander verdrehter Probenträgeraufnahmen ergibt.

2. Probenmanipulationseinrichtung (10) nach Anspruch 1, wobei die Abmessung des Probenträgers (24) in Längsrichtung größer ist als in Querrichtung.

3. Probenmanipulationseinrichtung (10) nach Anspruch 1 oder 2, wobei der Probenträger (24) eine in Längsrichtung verlaufende erste Symmetrieachse und eine in Querrichtung verlaufende zweite Symmetrieachse aufweist, die orthogonal zu der ersten Symmetrieachse ist.

4. Probenmanipulationseinrichtung (10) nach einem der Ansprüche 1 bis 3, wobei zur Überführung zwischen erster Orientierung und zweiter Orientierung die Probenträgeraufnahme (22) um eine zu der durch die Längsrichtung und die Querrichtung aufgespannte Ebene orthogonale Drehachse (D), insbesondere um eine vertikale Drehachse, drehbar ist.

5. Probenmanipulationseinrichtung (10), nach Anspruch 4, wobei die Drehachse (D) - bezogen auf einen in der Probenträgeraufnahme (22) aufnehmbaren Probenträger (24) - zentral angeordnet ist.

6. Probenmanipulationseinrichtung (10) nach einem der Ansprüche 1 bis 5, wobei die Probenträgeraufnahme (22) mit einem um eine vertikale Achse drehbaren Probentisch (20) gekoppelt ist.

7. Probenmanipulationseinrichtung (10) nach Anspruch 6, wobei die Probenträgeraufnahme (22) in dem Probentisch (20) ausgebildet ist.

8. Probenmanipulationseinrichtung (10) nach einem der Ansprüche 1 bis 7, ferner umfassend einen auf einen in der Probenträgeraufnahme (22) aufgenommenen Probenträger (24) zur Drehung desselben wenigstens zwischen der ersten und der zweiten Orientierung einwirkenden Drehantrieb (36).

9. Probenmanipulationseinrichtung (10) nachAnspruch 8, wobei der Probentisch (20) wenigstens eine kreisförmige Umfangsfläche aufweist, mit der der Drehantrieb (36) zusammenwirkt.

10. Probenmanipulationseinrichtung (10) nach Anspruch 9, wobei die kreisförmige Umfangsfläche des Probentischs (20) eine Verzahnung (38) aufweist, die mit einem Ausgangsritzel des Drehantriebs (36) zusammenwirkt oder eine Treibfläche aufweist, die reibschlüssig mit einem Ausgangsrad des Drehantriebs zusammenwirkt.

11. Probenmanipulationseinrichtung (10) nach einem der Ansprüche 1 bis 10, ferner umfassend einen auf die Probeneinheit (12) wirkenden Linearantrieb, durch welchen die Probeneinheit (12) relativ zu der jedenfalls in der Verfahrrichtung (A) feststehenden Manipulationseinheit (14) in der Verfahrrichtung (A) verlagerbar ist.

12. Probenmanipulationseinrichtung (10) nach Anspruch 11, wobei der Linearantrieb unterhalb der Probeneinheit (12) angeordnet ist.

13. Probenmanipulationseinrichtung (10) nach einem der Ansprüche 1 bis 12, wobei das Manipulationswerkzeug (44) um eine vertikale Achse drehbar an der Manipulationseinheit (14) angebracht ist und in vertikaler Richtung verfahrbar ist.

14. Probenmanipulationseinrichtung (10) nach Anspruch 13, wobei die Manipulationseinheit (14) eine Mehrzahl von Manipulationswerkzeugen (44A - 44H; 44A - 44L) aufweist, die in einer Richtung orthogonal zu der durch die Verfahrrichtung (A) definierten vertikalen Ebene aufgereiht sind.

15. Probenmanipulationseinrichtung (10) nach einem der Ansprüche 1 bis 14, wobei die Manipulationseinheit (14) einen auswechselbar angebrachten Werkzeugkopf (40) aufweist, wobei der Werkzeugkopf (40) als Ganzes in Vertikalrichtung verfahrbar ist und das wenigstens eine Manipulationswerkzeug (44) um eine vertikale Achse drehbar am Werkzeugkopf (40) angebracht ist.

16. Probenmanipulationseinrichtung (10) nach einem der Ansprüche 1 bis 15, ferner aufweisend eine Probengefäßidentifikationsvorrichtung (70) zur Identifikation des Probenträgers und/oder einzelner Probengefäße, welche sich in dem Probenträger (24) befinden.

17. Probenmanipulationseinrichtung (10) nach Anspruch 16, wobei die Probengefäßidentifikationseinrichtung (70) derart ausgebildet ist, dass sie am Boden eines jeweiligen Probengefäßes befindliche Identifikationsmuster erkennen kann.

18. Probenmanipulationseinrichtung nach Anspruch 16 oder 17, wobei die Probengefäßidentifikationseinrichtung (70) wenigstens einen optischen Sensor umfasst.

## Claims

1. A sample manipulation device (10) for removing lids from sample containers and/or placing lids onto sample containers, the sample manipulation device comprising:
a sample unit (12); and
a manipulation unit (14) having at least one manipulation tool (44), said manipulation tool (44) being configured to remove and place a lid on a sample container,
wherein the sample unit (12) and the manipulation unit (14) are movable relative to each other along a movement direction (A);
wherein the sample unit (12) comprises a sample carrier receptacle (22) for receiving at least one sample carrier (24) for holding one or more sample containers, said sample carrier extending in a longitudinal direction and a transverse direction orthogonal to said longitudinal direction;
wherein the sample unit (12) further is transferable between a first orientation in which the longitudinal direction of a sample carrier (24) adapted to be received in the sample carrier receptacle (22) is parallel to the movement direction (A) between the sample unit (12) and the manipulation unit (14), and a second orientation in which the transverse direction of a sample carrier (24) adapted to be received in the sample carrier receptacle (22) is parallel to the movement direction (A) between the sample unit (12) and the manipulation unit (14);
wherein the sample unit (12) comprises a sample carriage (18) that is displaceable in the movement direction (A), and wherein the sample carrier receptacle (22) is rotatably supported in the sample carriage (18) that is displaceable in the movement direction (A);
wherein the sample carriage (18) comprises a sample lid carrier receptacle (30) in which a sample lid carrier (32) associated with the respective sample carrier (24) can be received, wherein the sample lid carrier receptacle (30) is formed such that, both in the first orientation of the sample unit (12) and in the second orientation of the sample unit (12), the respectively associated sample lid carrier (32) can be received in the correct position in relation to the respective sample carrier (24) adapted to be received in sample carrier receptacle (22), with correct position meaning that the sample carrier receptacle (22) and the sample lid carrier receptacle (30) have the same orientation; and
wherein the sample lid carrier receptacle (30) - in a plan view - has an outline resulting from a combination of the outlines of two sample carrier receptacles rotated relative to each other by an angle of 90 degrees about a common axis of rotation thereof.

2. The sample manipulation device (10) according to claim 1,
wherein the dimension of the sample carrier (24) is larger in the longitudinal direction than in the transverse direction.

3. The sample manipulation device (10) according to claim 1 or 2,
wherein the sample carrier (24) has a first axis of symmetry extending in the longitudinal direction and a second axis of symmetry extending in the transverse direction and orthogonal to the first axis of symmetry.

4. The sample manipulation device (10) according to any of claims 1 to 3,
wherein, for transfer between the first orientation and the second orientation, the sample carrier receptacle (22) is rotatable about an axis of rotation (D) orthogonal to a plane defined by the longitudinal direction and the transverse direction.

5. The sample manipulation device (10) according to claim 4,
wherein the axis of rotation (D) is arranged centrally with respect to a sample carrier (24) adapted to be received in the sample carrier receptacle (22).

6. The sample manipulation device (10) according to any of claims 1 to 5,
wherein the sample carrier receptacle (22) is coupled with a sample table (20) that is rotatable about a vertical axis.

7. The sample manipulation device (10) according to claim 6,
wherein the sample carrier receptacle (22) is formed in the sample table (20).

8. The sample manipulation device (10) according to any of claims 1 to 7, further comprising a rotary drive (36) acting on a sample carrier (24) received in the sample carrier receptacle (22) for rotation thereof at least between said first and second orientations.

9. The sample manipulation device (10) according to claim 8,
wherein the sample table (20) has at least one circular peripheral surface for cooperation with the rotary drive (36).

10. The sample manipulation device (10) according to claim 9,
wherein the circular peripheral surface of the sample table (20) is formed with teeth (38) cooperating with an output pinion of the rotary drive (36), or has a driving surface frictionally cooperating with an output wheel of the rotary drive.

11. The sample manipulation device (10) according to any of claims 1 to 10, further comprising a linear drive acting on the sample unit (12) and adapted to displace the sample unit (12) in the movement direction (A) in relation to the manipulation unit (14) which is fixed at least in the movement direction (A).

12. The sample manipulation device (10) according to claim 11,
wherein the linear drive is arranged underneath the sample unit (12).

13. The sample manipulation device (10) according to any of claims 1 to 12,
wherein the manipulation tool (44) is attached to the manipulation unit (14) so as to be rotatable about a vertical axis, and is displaceable in a vertical direction.

14. The sample manipulation device (10) according to claim 13,
wherein the manipulation unit (14) comprises a plurality of manipulation tools (44A - 44H; 44A - 44L) that are lined up in a direction orthogonal to a vertical plane defined by the movement direction (A).

15. The sample manipulation device (10) according to any of claims 1 to 14,
wherein the manipulation unit (14) comprises an exchangeably mounted tool head (40), the tool head (40) being displaceable as a unit in a vertical direction and the at least one manipulation tool (44) being attached to the tool head (40) so as to be rotatable about a vertical axis.

16. The sample manipulation device (10) according to any of claims 1 to 15, further comprising a sample container identification device (70) for identification of the sample carrier and/or individual sample containers located in the sample carrier (24).

17. The sample manipulation device (10) according to claim 16,
wherein the sample container identification device (70) is formed such that it is capable of recognizing identification patterns located at the bottom of a respective sample container.

18. The sample manipulation device according claim 16 or 17,
wherein the sample container identification device (70) comprises at least one optical sensor.

## Revendications

1. Dispositif de manipulation d'échantillons (10) permettant de retirer les couvercles de récipients pour échantillons et/ou de poser les couvercles de récipients pour échantillons, comprenant
une unité d'échantillonnage (12) ; et
une unité de manipulation (14) avec au moins un outil de manipulation (44), l'outil de manipulation (44) étant réalisé de manière à retirer et à poser un couvercle sur un récipient d'échantillons ;
dans lequel l'unité d'échantillonnage (12) et l'unité de manipulation (14) sont déplaçables l'une par rapport à l'autre dans un sens de déplacement (A) ;
dans lequel l'unité d'échantillonnage (12) présente un logement de porte-échantillons (22) permettant de loger au moins un porte-échantillons (24) s'étendant dans un sens longitudinal et dans un sens transversal au sens longitudinal afin de maintenir un ou plusieurs récipients d'échantillons ;
dans lequel l'unité d'échantillonnage (12) peut en outre être transportée entre une première orientation, dans laquelle le sens longitudinal d'un porte-échantillons (24) plaçable dans le logement de porte-échantillons (22) est parallèle au sens de déplacement (A) entre l'unité d'échantillonnage (12) et l'unité de manipulation (14), et une deuxième orientation, dans laquelle le sens transversal d'un porte-échantillons (22) plaçable dans le logement de porte-échantillons (22) est parallèle au sens de déplacement (A) entre l'unité d'échantillonnage (12) et l'unité de manipulation (14) ;
dans lequel l'unité d'échantillonnage (12) présente un chariot d'échantillonnage (18) déplaçable dans le sens de déplacement (A) et où le logement de porte-échantillons (22) est logé de manière rotative dans le chariot d'échantillon (18) déplaçable dans le sens de déplacement (A) ;
dans lequel le chariot d'échantillonnage (18) présente un logement de porte-couvercle d'échantillons (30) dans lequel un porte-couvercle d'échantillons (32) affecté au porte-échantillons (24) correspondant peut être logé, le logement de porte-couvercle d'échantillons (30) étant réalisé de telle sorte que, tant dans la première orientation de l'unité d'échantillonnage (12) que dans la deuxième orientation de l'unité d'échantillonnage (12), le porte-couvercle d'échantillons (32) correspondant peut être logé correctement par rapport au porte-échantillons (24) plaçable dans le logement de porte-échantillons (22) correspondant, « correctement » signifiant que le logement de porte-échantillons (22) et le logement de porte-couvercle d'échantillons (30) présentent la même orientation ; et
dans lequel le logement de porte-couvercle d'échantillons (30) - selon une vue en plan - a un contour qui résulte de la réunion des contours de deux logements de porte-échantillons tournés l'un par rapport à l'autre selon un angle de 90 degrés autour de leur axe de rotation commun.

2. Le dispositif de manipulation d'échantillons (10) selon la revendication 1, dans lequel la dimension du porte-échantillons (24) est plus grande dans le sens longitudinal que dans le sens transversal.

3. Le dispositif de manipulation d'échantillons (10) selon la revendication 1 ou 2, dans lequel le porte-échantillons (24) présente un premier axe de symétrie dans le sens longitudinal et un deuxième axe de symétrie dans le sens transversal, qui est orthogonal au premier axe de symétrie.

4. Le dispositif de manipulation d'échantillons (10) selon l'une quelconque des revendications 1 à 3, dans lequel, pour le passage entre la première orientation et la deuxième orientation, le logement de porte-échantillons (22) peut tourner autour d'un axe de rotation (D) orthogonal au plan défini par le sens longitudinal et le sens transversal, en particulier autour d'un axe de rotation vertical.

5. Le dispositif de manipulation d'échantillons (10) selon la revendication 4, dans lequel l'axe de rotation (D) - par rapport à un porte-échantillons plaçable dans le logement de porte-échantillons (22) - est situé au centre.

6. Le dispositif de manipulation d'échantillons (10) selon l'une quelconque des revendications 1 à 5, dans lequel le logement de porte-échantillons (22) est couplé à une platine d'échantillonnage (20) pouvant tourner autour d'un axe vertical.

7. Le dispositif de manipulation d'échantillons (10) selon la revendication 6, dans lequel le logement de porte-échantillons (22) est réalisé dans la platine d'échantillonnage (20).

8. Le dispositif de manipulation d'échantillons (10) selon l'une quelconque des revendications 1 à 7, comprenant en outre un entraînement rotatif (36) agissant sur un porte-échantillons (24) placé dans le logement de porte-échantillons (22) pour faire tourner celui-ci au moins entre la première et la deuxième orientation.

9. Le dispositif de manipulation d'échantillons (10) selon la revendication 8, dans lequel la platine d'échantillonnage (20) présente au moins une surface circonférentielle circulaire, avec laquelle l'entraînement rotatif (36) interagit.

10. Le dispositif de manipulation d'échantillons (10) selon la revendication 9, dans lequel la surface circonférentielle circulaire de la platine d'échantillonnage (20) présente une denture (38) qui interagit avec un pignon de départ de l'entraînement rotatif (36) ou présente une surface d'entraînement qui interagit par friction avec une roue de départ de l'entraînement rotatif.

11. Le dispositif de manipulation d'échantillons (10) selon l'une quelconque des revendications 1 à 10, comprenant en outre un entraînement linéaire agissant sur l'unité d'échantillonnage (12), par lequel l'unité d'échantillonnage (12) peut être déplacée dans le sens de déplacement (A) par rapport à l'unité de manipulation (14) qui est en tout cas fixe dans le sens de déplacement (A).

12. Le dispositif de manipulation d'échantillons (10) selon la revendication 11, dans lequel l'entraînement linéaire est disposé en dessous de l'unité d'échantillonnage (12).

13. Le dispositif de manipulation d'échantillons (10) selon l'une quelconque des revendications 1 à 12, dans lequel l'outil de manipulation (44) est fixé sur l'unité de manipulation (14) de manière à tourner autour d'un axe vertical et peut être déplacé dans le sens vertical.

14. Le dispositif de manipulation d'échantillons (10) selon la revendication 13, dans lequel l'unité de manipulation (14) présente une pluralité d'outils de manipulation (44A - 44H ; 44A - 44L), qui sont alignés dans un sens orthogonal au plan vertical défini par le sens de déplacement (A).

15. Le dispositif de manipulation d'échantillons (10) selon l'une quelconque des revendications 1 à 14, dans lequel l'unité de manipulation (14) présente une tête d'outil (40) fixée de manière à être remplaçable, la tête d'outil (40) pouvant être déplacée comme un tout dans le sens vertical et l'outil de manipulation (44), un au moins, étant fixé à la tête d'outil (40) de manière à pouvoir tourner autour d'un axe vertical.

16. Le dispositif de manipulation d'échantillons (10) selon l'une quelconque des revendications 1 à 15, présentant en outre un dispositif d'identification de récipients d'échantillons (70) permettant d'identifier le porte-échantillons et/ou différents récipients d'échantillons qui se trouvent dans le porte-échantillons (24).

17. Le dispositif de manipulation d'échantillons (10) selon la revendication 16, dans lequel le dispositif d'identification de récipients d'échantillons (70) est réalisé de manière à pouvoir reconnaître les marques d'identification se trouvant au fond de chaque récipient d'échantillons.

18. Le dispositif de manipulation d'échantillons (10) selon la revendication 16 ou 17, dans lequel le dispositif d'identification de récipients d'échantillons (70) comprend au moins un capteur optique.
